# EUROPEAN PATENT APPLICATION

(11) **EP 3 613 708 A1**
(43) Date of publication of application: **26.02.2020**
(21) Application number: 19191490.2
(22) Date of filing: 13.08.2019
(51) Int. Cl.: C02F 1/34, B01F 5/06, B01J 19/00, C02F 11/04

(54) **PROCESS FOR THE BIOLOGICAL METHANATION OF GASEOUS SUBSTRATES BY HYDRODYNAMIC CAVITATION**

(30) Priority: 23.08.2018 IT 201800008168
(71) Applicant: Three ES S.r.l., 20824 Lazzate (MB) (IT)
(72) Inventor: SOLDO, Marco, 20824 Lazzate MB (IT); GARUTI, Mirco, 20824 Lazzate MB (IT); FABBRI, Claudio, 20824 Lazzate MB (IT)
(74) Representative: Perani & Partners S.p.A.

(57) **Abstract**

A process and a plant for biological methanation, wherein the process comprises the steps of: a) providing a biomass; b) providing H₂ and CO₂; c) disintegrating the biomass by hydrodynamic cavitation and obtaining a disintegrated biomass; d) causing anaerobic digestion of the disintegrated biomass in an anaerobic digester and obtaining a biogas and a digestate, and said process is characterized in that, during the disintegration step, the biomass is mixed with at least H₂ and CO₂ by hydrodynamic cavitation.

## Description

### FIELD OF THE INVENTION

This application relates to a method of biogas treatment and production.

### BACKGROUND OF THE INVENTION

In recent years, the problems of non-renewability of fossil fuels and environmental pollution associated with their use have been strongly felt.

As a result, there has been an increased interest in the use of renewable energy sources; nevertheless, some of them (e.g. wind, photovoltaic energy sources) are affected by significant problems associated with poor programmability and limited storage, whereby complete independence from fossil fuels is still far from being achieved.

An important role is played here by the biogas produced by anaerobic digestion, i.e. by conversion of the organic substances contained in organic residues (biomasses) through a microbiological process controlled in anaerobic digesters.

The term biogas is generally intended to designate a mixture of gases that result from biological degradation of organic substrates of various origins (organic fraction of municipal solid waste, food waste, plant biomass, animal slurries) through a process of anaerobic digestion (in the absence of oxygen) by specific microorganisms.

Biogas production has a key role among renewable energy sources because, first, its production may be modulated according to biomass quantity and quality and, second, it can have a number of advantageous uses.

The anaerobic digested biogas typically comprises 50% to 75% methane and may be converted into renewable electrical energy using an electric generation system or into electrical and thermal energy by cogeneration; the biogas may undergo upgrade to biomethane, thereby obtaining a gas containing 95% to 99% methane that can be introduced into the natural gas network.

Anaerobic digestion is composed of four steps, i.e. hydrolysis, acidogenesis, acetogenesis and methanogenesis. In the first three steps, different groups of bacteria interact to metabolize complex organic macromolecules that compose the biomasses to obtain acetic acid, carbon dioxide and molecular hydrogen. In the last methanogenesis step, certain microorganisms, known as acetoclastic microorganisms, convert the acetic acid into methane and carbon dioxide and others, known as hydrogenotrophic microorganisms, convert carbon dioxide and hydrogen into methane. About 70% biogas is typically obtained by anaerobic digestion from methanogenic *Archaea* and 30% from hydrogenotrophic *Archaea.*

In general, the term biomass is intended to designate any material having a biodegradable fraction of biological origin: it may be derived from agriculture, forestry and pisciculture and includes substances deriving both from plants and animals; any product, waste and residue from wood and paper processing industries may be considered as a biomass; all products, wastes and organic residues having a biodegradable fraction resulting from the biological activity of animals and humans, such as those contained in municipal waste or in agro-industrial byproducts associated with processing of material flows in the primary sector may be defined in all respects biomass.

In the prior art, anaerobic digestion is a well-established process, which is widespread in both industrial and farming contexts.

One of the drawbacks of prior art technologies, in terms of both biogas employment for the production of electrical and thermal energy, and use of biogas as biofuel, is the failed exploitation of the carbon dioxide (CO₂) released into the atmosphere.

Carbon dioxide (CO₂) may be exploited in a so-called methanation process by reaction with molecular hydrogen (H₂) to obtain additional methane (CH₄). Molecular hydrogen (H₂) may be obtained by electrolysis of water by exploiting extra-electrical energy from non-programmable renewable sources such as photovoltaic and wind energy sources; here the technology for conversion of electrical energy into chemical energy is known as power-to-gas.

Methanation of CO₂ and H₂ may be obtained by chemical methods, characterized by high temperatures, pressures and use of catalysts, or by biological methods, using a biotechnological process that leverages the metabolism of hydrogenotrophic microorganisms conducted at considerably lower temperatures and pressures and with reduced energy costs.

At present, chemical and biological methanation methods are not particularly popular, due to technical and cost limitations.

One of the main technical limits for biological methanation is dissolution of molecular hydrogen in the liquid phase, which is an indispensable condition for its use by microorganisms.

Hydrodynamic cavitation is a phenomenon that consists in the formation of vapor zones in a fluid, which later implode and generate a shock wave. Hydrodynamic cavitation may be industrially obtained by rotor/stator systems, Venturi, perforated plates or combined systems.

Namely, controlled hydrodynamic cavitation may be obtained by means of a technology that uses of a steel cylinder with blind cavities, which rotates inside a casing; its controlled rotation creates a pressure difference in the holes on the cylinder, leading in turn to the formation and subsequent implosion of microbubbles.

Controlled hydrodynamic cavitation is currently used as a system for biomass pretreatment as it produces a strong thermal and mechanical activity on the organic substance in the aqueous solution, resulting in partial physical destructuration, which translates into an acceleration of the hydrolysis step and, as a result, an improvement of the anaerobic digestion process as a whole; it is known as "controlled" because the disintegration degree may be modulated.

### SUMMARY OF THE INVENTION

The Applicant has found that the hydrodynamic cavitation process may be also used to enhance mixing of gases in the liquid phase.

Therefore, the Applicant has developed a process for biological methanation of CO₂ and H₂ which can increase the biological efficiency of methane production.

According to the present invention, this object is fulfilled by a process as defined in claim 1.

Such process uses hydrodynamic cavitation, to disintegrate and homogenize a biomass, as well as to improve dissolution of gaseous substrates, comprising H₂ and CO₂, in a fermentation liquid. By using hydrodynamic cavitation in the biological methanation process the mass transfer coefficient of hydrogen from the gas phase to the liquid phase may be advantageously increased, which increases the availability of the gaseous substrate in a solution, containing hydrogenotrophic methanogenic microorganisms.

A further object of the present patent application is the system for carrying out the aforementioned process.

### DETAILED DESCRIPTION OF THE INVENTION

The term biomass is intended to designate a substrate adapted for processing and generating biogas according to the present invention.

Preferably, the biomass consists of an organic substrate, or digestates, or fermentation liquid comprising anaerobic microorganisms.

Within the scope of the present invention, suitable organic substrates are, for example, plant biomass, food by-products (es.: whey, two-phase olive mill waste, fruit and vegetable processing by-products) manure, organic waste (es.: organic fraction of municipal solid waste, urban green waste).

The term digestate is intended to designate the material fermenting in or coming out of an anaerobic digester.

With fermentation liquid is intended to designate a bacteria culture medium comprising water and a pure or mixed culture of anaerobic microorganisms involved in the process of anaerobic digestion, preferably hydrogenotrophic microorganisms (e.g.: *Methanothermobacter* spp., *Methanobacterium* spp., *Methanococcoides* spp.). In the context of anaerobic digestion, the fermentation liquid constitutes the fermentation starter of an anaerobic digester.

The process of the present invention can advantageously use biomass having a variable water content, depending on the nature and origin of the biomass.

It shall be noted that the biomass preferably has a water content range from 1% to 99% (wt/wt %).

More preferably, the biomass has a water content ≥ 90% (wt/wt %).

If the water content of the incoming biomass is unsuitable for its use, the incoming biomass is preferably mixed with a liquid phase, to obtain a biomass having a water content ranging from 1% to 99%, more preferably ≥ 90% (wt/wt %).

The liquid phase preferably consists of an aqueous fluid, e.g. selected for example from at least one of the following: water or a fermentation liquid comprising hydrogenotrophic anaerobic microorganisms or a digestate or mixtures thereof.

Then the biomass undergoes a disintegration step by hydrodynamic cavitation, to obtain a disintegrated biomass.

During disintegration, the biomass is mixed with at least hydrogen (H₂) and carbon dioxide (CO₂) by hydrodynamic cavitation.

Note that such H₂ and CO₂ 10 are in the form of gases.

H₂ and CO₂ gases may be of synthetic origin or biogenic origin. More preferably, H₂ and CO₂ may be totally or partially of synthetic or biogenic origin.

Such H₂ and CO₂ may be in the form of individual reactants or contained in a complex gas mixture.

Preferably, one or both of these H₂ and CO₂ are contained in a gas selected from at least one of the following: biogas, syngas, landfill gas, gases from other types of biothechnological or industrial fermentation.

The term syngas is intended to designate a fuel gas mainly comprising hydrogen, carbon monoxide and having traces of carbon dioxide. Syngas is produced by gasification, for reaction with steam, carbon monoxide and oxygen. It may be obtained from different sources such as natural gas, coal, biomass and any hydrocarbon feedstock.

The term landfill gas is intended to designate a gas mainly comprising methane and carbon dioxide at a ratio ranging from 40-70% to 30-60%. Nitrogen, oxygen, hydrogen and various organic compounds are present as relative components. Landfill gas is produced by intensive biodegradation of municipal and agricultural waste comprising household, commercial and agricultural organic waste, paper, cardboard, food waste, plastic, rubber, glass, miscellaneous waste, metals and else.

The gases obtained from other types of biotechnological or industrial fermentation are, for example, gases obtained as alcoholic fermentation waste, gases resulting from the butyric fermentation process, gases obtained as waste from generation of electrical and thermal energy from biogas, as waste from upgrade of biogas to methane, as a byproduct from ammonia production plants, as a by-product of sodium phosphate production. These gases mainly comprise hydrogen and carbon dioxide, with the latter ranging from 70-99%.

The disintegration obtained by the hydrodynamic cavitation process can reduce the particle size of the material fractions having a diameter > 5 mm, so that these fractions will represent a total solid amount of less than 5 % based on the total weight of the biomass.

The disintegrated biomass so obtained is directed to an anaerobic digester 30, to undergo an anaerobic digestion step.

The anaerobic digester preferably contains a fermentation liquid comprising inorganic salts, which are added to the liquid, for example, by mineral solutions.

Preferably these inorganic salts include macroelements, selected for example from at least one of the following: nitrogen, phosphorus, potassium, sulfur, magnesium, manganese, sodium; these inorganic salts include trace elements, selected for example from at least one of the following: nickel, cobalt, selenium, molybdenum, iron, zinc, copper, boron, tungsten.

The disintegrated biomass preferably undergoes anaerobic digestion at a temperature ranging from 30°C and 60°C, preferably at a pH ranging from 6.5 to 8.5.

Two products result from anaerobic digestion of disintegrated biomass: a biogas and a digestate.

Note that the biogas obtained with the process of the present invention is advantageously rich in methane (CH₄), i.e. has a methane content ranging from 60 to 99% (v/v %), with a yield that is preferably more than 20 m³ CH₄/(m³ digester · day).

In a preferred embodiment, the aforementioned digestate constitutes the liquid phase of the process of the present invention.

In an alternative embodiment, the biomass consists of the digestate.

The method may be carried out by recirculating operation, for example by replacing the biomass with a part of the digestate or fermentation liquid of the anaerobic digester.

Advantageously the aforementioned digestate is compatible with agricultural use and may be used for soil fertilization.

Disintegration by hydrodynamic cavitation can advantageously reduce the size of the solid/fibrous fraction in the diluted biomass, improve homogeneity thereof and afford smooth flow of material into the digester.

The use of controlled hydrodynamic cavitation can improve mixing of the biomass with the gaseous reactants, by facilitating dissolution of gases in the liquid phase, increasing availability and uptake rate for the hydrogenotrophic methanogenic microorganisms in the fermentation liquid.

The specific methane production of the inventive process, measured as amount of methane produced in a unit volume of the capacity of the reactor per unit time (which can be expressed with the units of measure m³CH₄/(m³ digester · day), is preferably more than 20 m³ CH₄/(m³ digester · day) and indicatively ranging from 1 to 100 m³ CH₄/(m³ digester · day).

The biochemical reactions that lead to the production of methane by anaerobic digestion are similar to those of Formula 1 in which acetic acid is converted into methane and carbon dioxide, and Formula 2, in which hydrogen and carbon dioxide react to form methane and water:

*Formula 1* CH₃COOH ⇄ CH₄+CO₂

*Formula 2* 4H₂ + CO₂ ⇄ CH₄ + 2H₂O

The addition of H₂ and CO₂ reactants can promote methane production by hydrogenotrophic microorganisms, with a process known as biological methanation.

The process of the invention can shift production and hence microbial methanogenic activity toward the hydrogenotrophic *Archea* to production percentages of more than 30%, using a process and a plant that are novel with respect to prior art technologies.

## Claims

1. A process for the biological methanation of CO₂ and H₂ comprising the steps of:
a) prearranging a biomass
b) prearranging H₂ and CO₂;
c) disintegrating the biomass by hydrodynamic cavitation and obtaining a disintegrated biomass;
d) anaerobic digestion of the disintegrated biomass in an anaerobic digester and obtaining a biogas and a digestate,
said process **characterized in that**
during the disintegration step c, the biomass is mixed with at least H₂ and CO₂ by hydrodynamic cavitation.

2. The process according to claim 1, wherein the biomass has a water content between 1% and 99% by weight, of the total weight of the biomass.

3. The process according to claim 2, wherein the biomass has a water content ≥ 90% by weight, of the total weight of the biomass.

4. The process according to any one of claims 1 to 3, wherein said H₂ and CO₂ have synthetic or biogenic origin.

5. The process according to claim 4, wherein one or both of said H₂ and CO₂ are contained in a gas selected from at least one of the following: biogas, syngas, landfill gas, gas deriving from other types of fermentations in the biotechnological field or by industrial processes.

6. The process according to any one of claims 1 to 5, wherein the biomass consists of the digestate or of the fermentation liquor of the digester.

7. A plant for treating and producing biogas from biomasses according to the process in accordance with any one of claims 1 to 3.
